# EUROPÄISCHE PATENTSCHRIFT

(11) **EP 3 278 691 B1**
(45) Veröffentlichungstag und Bekanntmachung des Hinweises auf die Patenterteilung: **20.02.2019**
(21) Anmeldenummer: 17182208.3
(22) Anmeldetag: 19.07.2017
(51) Int. Cl.: A47J 27/04, F22B 1/28, A21B 3/04, F24C 15/32, F16T 1/00

(54) **VERDAMPFEREINRICHTUNG FÜR WASSER UND GARGERÄT MIT EINER SOLCHEN VERDAMPFEREINRICHTUNG**
EVAPORATOR DEVICE FOR WATER AND COOKING DEVICE WITH SAME
ÉVAPORATEUR ET APPAREIL DE CUISSON COMPRENANT UN TEL DISPOSITIF

(30) Priorität: 02.08.2016 DE 102016214283
(43) Veröffentlichungstag der Anmeldung: 07.02.2018
(73) Patentinhaber: E.G.O. Elektro-Gerätebau GmbH, 75038 Oberderdingen (DE)
(72) Erfinder: Albert, Tobias, 76703 Kraichtal (DE); Block, Volker, 75015 Bretten (DE); Mühlnikel, Roland, 75015 Bretten (DE); Robin, Bernd, 76703 Kraichtal (DE); Schönemann, Konrad, 75056 Sulzfeld (DE); Tafferner, Michael, 76316 Malsch (DE)
(74) Vertreter: Patentanwälte Ruff, Wilhelm, Beier, Dauster & Partner mbB

(56) Entgegenhaltungen:
- DE-A1-102007 029 244
- DE-A1-102012 213 385
- DE-A1-102013 200 277
- DE-A1-102014 201 640

## Beschreibung

### ANWENDUNGSGEBIET UND STAND DER TECHNIK

Die Erfindung betrifft eine Verdampfereinrichtung für Wasser bzw. zum Erhitzen von Wasser für ein Gargerät, insbesondere für einen Dampfgarer, sowie ein Gargerät mit einer solchen Verdampfereinrichtung.

Aus der WO 02/12790 A1 ist ein Gargerät mit Dampferzeugung mittels einer Heizeinrichtung bekannt, die einen Dampferzeugungsbehälter in Form eines senkrecht stehenden Rohres aufweist. Außen an dem Dampferzeugungsbehälter ist ein flächiges Heizelement angeordnet. Eine Wasserzufuhr in den Dampferzeugungsbehälter erfolgt von unten, während der erzeugte Dampf nach oben entweichen kann und im Gargerät zum Dampfgaren verwendet wird.

Aus der DE 10 2007 029244 A1 ist eine Verdampfereinrichtung für Wasser für einen Dampfgarer als Gargerät bekannt.

Aus der DE 10 2014 201640 A1 ist eine weitere Heizeinrichtung bekannt, die für eine Flächenheizung eines Haushaltsgeräts ausgelegt ist.

Aus der DE 10 2012 213385 A1 ist eine weitere Verdampfereinrichtung mit einem Rohr bekannt, in der hindurchfließendes Wasser erhitzt werden soll.

### AUFGABE UND LÖSUNG

Der Erfindung liegt die Aufgabe zugrunde, eine eingangs genannte Verdampfereinrichtung und ein Gargerät mit einer solchen Verdampfereinrichtung zu schaffen, mit denen Probleme des Standes der Technik gelöst werden können und es insbesondere möglich ist, Wasser schnell, energieeffizient und gleichzeitig zuverlässig sowie fehlerunanfällig zu verdampfen. So sollen eine Verdampfereinrichtung und ein Gargerät sicher mit hoher Leistung betrieben werden können.

Gelöst wird diese Aufgabe durch eine Verdampfereinrichtung mit den Merkmalen des Anspruchs 1 und ein entsprechendes Gargerät mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für die Verdampfereinrichtung oder nur für das Gargerät beschrieben. Sie sollen jedoch unabhängig davon sowohl für die Verdampfereinrichtung als auch für das Gargerät selbstständig und unabhängig voneinander gelten können. Der Wortlaut der Ansprüche wird durch ausdrückliche Bezugnahme zum Inhalt der Beschreibung gemacht.

Es ist vorgesehen, dass die Verdampfereinrichtung Wasser zum Verdampfen bringt, wenngleich es auch möglich ist, andere Flüssigkeiten zu verdampfen. Der dadurch entstandene Dampf kann in einem Dampfgarer auf übliche Art und Weise zum Garen bzw. Zubereiten von Nahrungsmitteln dienen. Die Verdampfereinrichtung weist einen Wasserbehälter mit einer Außenwandung auf, wobei in dem Wasserbehälter bzw. durch die Außenwandung ein Behältervolumen darin definiert ist. Dieses Behältervolumen kann relativ groß sein, beispielsweise 0,5 l bis 1 l oder sogar bis 3 l betragen. An der Außenwandung des Wasserbehälters ist eine Heizeinrichtung vorgesehen. Diese kann vorteilhaft flächig ausgebildet sein bzw. eine größere Fläche überdecken. Vorteilhaft kann sie als an sich bekannte Dickschichtheizeinrichtung ausgebildet sein. Des Weiteren ist in dem Wasserbehälter eine Innentrennwand vorgesehen, die zumindest teilweise mit einem Abstand zu der Außenwandung verläuft und die einen Innenbereich in dem Wasserbehälter definiert. In wenigen Punkten oder Bereichen kann die Innentrennwand den Wasserbehälter berühren bzw. an ihm oder an der Außenwandung anliegen. Sie soll jedoch weitgehend einen Abstand zu der Außenwandung aufweisen. Der in der Innentrennwand definierte Innenbereich ist vorteilhaft nicht klein im Vergleich zum gesamten Behältervolumen, besonders vorteilhaft beträgt er zwischen 40% und 75% oder sogar 95% des Behältervolumens, also einen großen oder dessen größten Teil. Nach oben kann der Innenbereich innerhalb der Innentrennwand vorteilhaft zumindest teilweise offen sein.

An einer Außenwandung, die den Mantel des Wasserbehälters bildet, sind Heizelemente der Heizeinrichtung flächig verteilt angeordnet. Sie sollten einen Großteil der Außenwandung bedecken, beispielsweise zwischen 60% und 90%. Die Heizelemente können unterschiedlich ausgebildet sein, vorteilhaft sind es flächige Heizelemente, insbesondere Schichtheizelemente bzw. Dickschichtheizelemente. Solche Heizelemente sind beispielsweise aus der DE 102012213385 A1 bekannt. Die Heizelemente sind auf mindestens zwei separate und/oder separat betreibbare Heizkreise aufgeteilt. Jeder dieser Heizkreise weist mindestens ein Heizelement auf. Die Definition eines Heizelementes umfasst einen Abschnitt eines elektrischen Widerstands, der bei Betrieb mit Stromfluss heiß wird bzw. sich aufheizt. Ein Heizelement kann dabei insbesondere aus einem entsprechenden Widerstandsmaterial bestehen und zwischen zwei Anschlüssen oder Kontaktierungen verlaufen. Ein Heizkreis definiert sich dadurch, dass die von ihm umfassten Heizelemente nur gemeinsam betrieben werden können, also ein- und ausgeschaltet werden können. Vorteilhaft werden die Heizelemente eines gemeinsamen Heizkreises vom selben Strom durchflossen, sind also in Reihe geschaltet.

Zwischen der Innentrennwand und der Außenwandung ist ein sogenannter Außenbereich gebildet. In diesem Außenbereich soll Wasser durch die Heizeinrichtung erhitzt und verdampft werden zur Erzeugung von Dampf. Das Behältervolumen kann also im Wesentlichen die Summe von Innenbereich und Außenbereich gemeinsam betragen. Vorteilhaft ist das Volumen des Innenbereichs größer als dasjenige des Außenbereichs, siehe vorhergehende Angaben für den Außenbereich. Der Außenbereich ist vorteilhaft nach oben offen, also innerhalb des Wasserbehälters nach oben offen. Der Wasserbehälter kann einen Wasserzulauf und einen Dampfaustritt aufweisen bzw. vorteilhaft bis auf einen Wasserzulauf und einen Dampfaustritt geschlossen sein, so dass er sowohl dicht ist gegen einen Wasseraustritt als auch eine gezielte Entnahme von Dampf ermöglicht. Besonders vorteilhaft ist nur ein einziger Wasserzulauf vorgesehen. In ähnlicher Weise kann besonders vorteilhaft ein einziger Dampfaustritt vorgesehen sein an ein Rohr oder einen Schlauch. Unter Umständen kann noch eine weitere Schnittstelle am Wasserbehälter als Zulauf oder als Ablauf vorgesehen sein, was später näher beschrieben wird.

Des Weiteren ist mindestens ein Temperatursensor an der Außenwandung bzw. deren Außenseite vorgesehen, da die Temperaturerfassung bei einer Verdampfereinrichtung sowohl für den regulären Betrieb als auch zur Erkennung von Störungen oder Fehlern im Betrieb wichtig ist. Temperatursensoren können in unterschiedlichen Arten vorhanden sein, beispielsweise mindestens zwei Arten von Temperatursensoren. Das wird nachfolgend noch näher erläutert.

Erfindungsgemäß weist der Wasserbehälter mindestens einen Durchlasskanal auf für einen Wasserfluss zwischen dem Innenbereich und dem Außenbereich. Somit ist hier also im Gegensatz zum vorgenannten Stand der Technik vorgesehen, dass der Innenbereich auch Wasser enthält bzw. mit Wasser gefüllt ist. Nach Art eines kommunizierenden Systems kann das Wasser durch den Durchlasskanal vom Innenbereich in den Außenbereich fließen. Dadurch ist es möglich, dass das Nachfüllen von Wasser im Außenbereich zumindest teilweise, insbesondere vollständig, durch den mindestens einen Durchlasskanal erfolgt aus dem Innenbereich. Insbesondere wenn der Innenbereich größer ist als der Außenbereich bzw. ein größeres Volumen aufweist ist es so möglich, dass durch die Heizeinrichtung mit dem Außenbereich nur ein eher kleines Wasservolumen aufgeheizt werden muss bis zur Erzeugung von Dampf. Das Versorgen mit Wasser bzw. das Nachliefern von Wasser muss dann aber nicht aufwendig und genau sowie störungsanfällig gesteuert werden bzw. geregelt werden über den Wasserzulauf. Da die Wassermenge im Außenbereich eine Rolle spielt für die Dampferzeugung bzw. das Verhalten der Dampferzeugung, insbesondere im Zusammenhang mit der von der Heizeinrichtung eingebrachten Heizleistung, ist es einfacher, den Wasserzulauf in den Innenbereich hinein zu legen. So kann vom Innenbereich und somit von einem vorteilhaft größeren Volumen aus ein selbsttätiges Nachfüllen des Außenbereichs erfolgen. Vor allem wenn der Innenbereich 50% bis 100% oder sogar 150% größer ist als der Außenbereich ist der Vorteil des Erhitzens des geringeren Wasservolumens samt des einfachen selbsttätigen Nachfüllens besonders groß.

Ein Temperatursensor einer ersten Art ist vorteilhaft als flächige Beschichtung oder als eine Beschichtung an der Außenseite der Außenwandung aufgebracht, die eine Fläche überdeckt. Er ist eine flächige Beschichtung mit einer gewissen Größe bzw. Ausdehnung, insbesondere mit einem signifikanten Anteil an der Fläche der Außenwandung. So ist eine quasi-flächige Überwachung einer Temperatur bzw. heißer Stellen möglich. Hierzu wird nachfolgend noch mehr erläutert.

Vorteilhaft weist ein Heizkreis mehrere Heizelemente auf, die aber besonders vorteilhaft seriell geschaltet sind. Insbesondere können die Heizelemente eines Heizkreises so ausgebildet und angeschlossen sein, dass sie zwingend und unveränderlich nur gemeinsam betrieben werden können.

Durch eine Aufteilung der Beheizung für die Verdampfereinrichtung in mehrere separate und separat betreibbare Heizkreise kann eine weite Einstellbarkeit der Beheizung bzw. der eingebrachten Heizleistung an der Heizeinrichtung erreicht werden. Somit kann unter Umständen ein Heizkreis auch abgeschaltet werden, beispielsweise wenn er nicht benötigt wird oder eine Fehlfunktion aufweist. Es ist auch möglich, einen Heizkreis noch einmal sozusagen zu unterteilen in zwei oder mehr Teil-Heizkreise, von denen jeder seine eigenen Heizelemente aufweisen kann. Die Unterteilung kann in einen oberen Teil-Heizkreis und einen unteren Teil-Heizkreis erfolgen, alternativ in mäanderartig verschränkte oder ineinander greifende Teil-Heizkreise. Jeder von diesen kann dann separat betrieben werden, beispielsweise durch einen Anschluss als Zwischenabgriff, sie müssen also nicht gemeinsam betrieben werden. Zumindest ein Teil-Heizkreis sollte abschaltbar ausgebildet sein. Vorteilhaft ist ein oberster Heizkreis so ausgebildet und/oder ein mittlerer Heizkreis.

Erfindungsgemäß ist für den Temperatursensor der ersten Art auf der Außenseite der Außenwandung eine dielektrische Isolationsschicht aufgebracht, über der wiederum die Heizelemente eines Heizkreises aufgebracht sind. Über diesem Heizelement ist eine Abdeckschicht vorgesehen, die auch zu Isolationszwecken dienen kann sowie zur Vermeidung von Korrosion. Des Weiteren ist eine Messelektrode vorgesehen auf der Isolationsschicht oder vorteilhaft auf einer leitfähigen Fläche darunter, die als elektrischer Anschluss an die Isolationsschicht dient. Bei einem metallischen Wasserbehälter ist seine Außenwandung diese leitfähige Fläche. Eine Messeinrichtung, die zu der Verdampfereinrichtung bzw. zu dem Gargerät gehört und in deren Steuerung integriert ist, ist sowohl mit dieser Messelektrode als auch mit den Heizelementen bzw. einem jeweiligen Heizkreis über der dielektrischen Isolationsschicht verbunden, die als andere Elektrode dienen. Die Messeinrichtung ist dabei ausgebildet, um einen Stromfluss zwischen den Heizelementen bzw. dem Heizkreis und der Messelektrode zu erfassen. Dieser Stromfluss wiederum kann als Maß für eine Temperaturänderung an dem Heizkreis bzw. an dem Wasserbehälter im Bereich nahe dem Heizkreis verwendet werden.

Eine solche Art der Temperaturerfassung bei flächig verteilten Heizelementen über eine dielektrische Isolationsschicht ist aus der DE 102013200277 A1 sowie der WO 2007/136268 A1 bekannt, auf welche explizit verwiesen wird, insbesondere bzgl. der Ausgestaltung der dielektrischen Isolationsschicht. Hier wird der sogenannte Ableitstrom gemessen, der über bzw. durch die Isolationsschicht an die Heizelemente des Heizkreises fließt. Mit steigender Temperatur wird die Isolationsschicht stromführender bzw. ihr elektrischer Widerstand geringer, da diese Eigenschaft stark temperaturabhängig ist. Selbst bei einer lokalen Überhitzung bzw. einer lokal eng begrenzten Überhitzung, beispielsweise auf 200°C bis 250°C, kann dies innerhalb der relativ großen Fläche eines gesamten Heizkreises entdeckt werden, da in diesem Bereich der Überhitzung der elektrische Widerstand der Isolationsschicht deutlich sinkt und somit auf einmal ein Ansteigen des Stroms über die Isolationsschicht hin zu den Heizelementen erfolgt. An welcher Stelle diese lokale Überhitzung auftritt kann zwar nicht erfasst werden, ist aber auch ohne Belang, da eine solche lokale Überhitzung auf alle Fälle als Fehler gewertet wird und somit zum Abschalten des entsprechenden Heizkreises oder sogar der gesamten Verdampfereinrichtung führen kann. Somit kann mit den Temperatursensoren der ersten Art ein großer Bereich auf starke Temperaturüberhöhungen überwacht werden, die dann aber nicht großflächig erfolgen müssen, sondern bereits relativ punktuell erfasst werden können.

Die dielektrische Isolationsschicht ist erfindungsgemäß direkt auf die Außenseite der Außenwandung aufgebracht und bedeckt einen Großteil von deren gesamter Oberfläche. Insbesondere bedeckt die Isolationsschicht mindestens 90% der Oberfläche der Außenseite, wobei es vorteilhaft eine einzige durchgehende dielektrische Isolationsschicht unter allen Heizelementen ist. Eine Aufteilung auf die einzelnen Heizkreise mit jeweiliger Trennung voneinander ist nicht unbedingt notwendig, da über Kontaktierung an den entsprechenden Heizkreis als eine Art Elektrode erfasst werden kann, was sich im Bereich dieses Heizkreises ereignet. So ist eine räumliche Unterscheidung nach Heizkreisen möglich.

In Ausgestaltung der Erfindung verlaufen die Messelektrode und die Heizelemente in unterschiedlichen Schichten. Zwischen ihnen können sich die Isolationsschicht und/oder eine Abdeckschicht befinden. Eine solche Messelektrode kann flächig ausgebildet sein und im Wesentlichen die Heizelemente überdecken, so dass diese selbst nicht als Messelektrode benutzt werden müssen und eine bessere Trennung möglich ist. Eine erste Messelektrode kann eben vorteilhaft an die Außenwandung direkt aufgebracht werden, wenn diese aus Metall besteht. Somit ist diese erste Messelektrode quasi durchgängig über alle Heizkreise verteilt. Die Unterteilung der Temperaturerfassung auf die Bereiche der einzelnen Heizkreise erfolgt aber eben durch Kontaktierung an den Heizkreisen selbst.

In weiterer Ausgestaltung der Erfindung kann auf der Isolationsschicht eine weitere Zusatz-Isolationsschicht aufgebracht sein. Sie kann vorteilhaft eine sogenannte Zwischen-Glasschicht sein. Die Heizelemente können dabei auf die Zusatz-Isolationsschicht aufgebracht sein. Dadurch kann der Effekt für die Temperaturmessung verstärkt werden.

Vorteilhaft ist pro Heizkreis mindestens ein Temperatursensor der ersten Art vorgesehen, vorzugsweise genau ein Temperatursensor der ersten Art. Dieser Temperatursensor bedeckt dann mindestens 50% der Fläche der Heizelemente des zugehörigen Heizkreises, insbesondere 90% bis 100%. Dann kann die gesamte Fläche dieses Heizkreises auf lokale Temperaturerhöhungen überwacht werden, wie es zuvor beschrieben worden ist.

Durch mehrere Temperatursensoren, insbesondere Temperatursensoren verschiedener Art, kann in entsprechend mehreren Bereichen sowohl der Betrieb der Heizeinrichtung als auch deren Zustand überwacht werden, insbesondere hinsichtlich Störfällen oder Verkalkung an der Innenseite der Außenwandung. Dies ist für Heizeinrichtungen von Flüssigkeiten bzw. Verdampfern stets ein wichtiges Thema.

Temperatursensoren einer zweiten Art können diskrete Bauteile sein, die auf die Außenseite der Außenwandung aufgesetzt sind, beispielsweise sind es SMD-Bauteile. Dabei sind sie beispielsweise auf entsprechende Kontaktfelder aufgesetzt und elektrisch kontaktiert sowie befestigt. Vorteilhaft sind die Temperatursensoren der zweiten Art bzw. alle Temperatursensoren und die Heizelemente unterschiedliche Bauteile.

In Ausgestaltung der Erfindung sind die Temperatursensoren der zweiten Art NTC-Sensoren, wie sie grundsätzlich bekannt sind. Sie können eben vorteilhaft als SMD-Bauteile ausgebildet sein und an entsprechende Kontaktfelder an der Außenseite aufgebracht werden. Ein solcher Temperatursensor der zweiten Art misst die Temperatur in einem räumlich sehr eng begrenzten Bereich um ihn herum, beispielsweise 1 cm oder weniger bei SMD-Bauteilen. Wird ein solcher Temperatursensor der zweiten Art auf einer Höhe an der Außenwandung angebracht, auf der im Betrieb immer Wasser angeordnet ist, so kann er die Wassertemperatur in etwa erfassen mit geringer Verfälschung durch eine räumliche Nähe zu einem Heizelement einerseits und durch die Trennung von der zu erhitzenden Flüssigkeit durch die Außenwandung andererseits. Größerflächige bzw. großflächige Temperaturüberwachungen sind damit aber eher nicht gut durchführbar.

In vorteilhafter Ausgestaltung der Erfindung ist pro Heizkreis mindestens ein Temperatursensor der zweiten Art vorgesehen, besonders vorteilhaft genau ein einziger Temperatursensor der zweiten Art. Ein solcher Temperatursensor der zweiten Art kann im Bereich und entlang einer vertikalen Längsachse des Behälters auf Höhenniveau des jeweiligen Heizkreises vorgesehen sein, also quasi nahe zu einem Heizkreis vorgesehen sein und damit diesem zugeordnet. Es kann vorgesehen sein, dass für mindestens den untersten Heizkreis, vorteilhaft für die beiden untersten Heizkreise, jeweils genau ein Temperatursensor der zweiten Art vorgesehen ist. Dieser kann dann wiederum jeweils im unteren Bereich dieses Heizkreises vorgesehen sein, beispielsweise auf Höhe von dessen unterstem Heizelement. So kann die Temperatur einer Flüssigkeit mit einer Füllstandshöhe erfasst werden, die von unten gerade an den Heizkreis heranreicht.

Ein Abstand eines solchen Temperatursensors der zweiten Art zu einem nächstgelegenen Heizelement kann zwischen dem Zweifachen und dem Zwanzigfachen der Dicke der Außenwandung liegen, vorteilhaft zwischen dem Fünffachen und dem Zehnfachen. Somit ist der Abstand nicht besonders groß, er kann auch beispielsweise das Einfache bis Dreifache der maximalen Längserstreckung des Temperatursensors betragen. Damit kann der Temperatursensor der zweiten Art im Wesentlichen frei von Einflüssen eines nächstgelegenen Heizelements die Temperatur der Außenwandung in seinem nächsten Bereich und somit die Temperatur von Wasser innen im Wasserbehälter in diesem Bereich erfassen. Beträgt die Temperatur deutlich über 100°C, so kann, wie später noch ausgeführt wird, leicht darauf geschlossen werden, dass im Bereich dieses Temperatursensors kein Wasser mehr vorhanden ist, was dann ggf. zum Abschalten des diesem Temperatursensor der zweiten Art zugeordneten Heizkreises führen kann.

Es kann vorgesehen sein, dass in vertikaler Höhenerstreckung des Wasserbehälters jeder Heizkreis von den anderen Heizkreisen beabstandet ist. Somit bedeckt jeder Heizkreis einen eigenen Höhenbereich der Außenwandung, die Heizkreise überlappen sich also nicht in der vertikalen Richtung. Vorzugsweise sind zumindest die beiden untersten Höhenbereiche und somit auch Heizkreise gleich hoch. Insbesondere sind dabei die beiden untersten Heizkreise bzgl. ihrer Heizelemente und/oder Anordnung identisch ausgebildet. Dies kann auch für die Anordnung eines Temperatursensors der ersten Art und/oder der zweiten Art an dem jeweiligen Heizkreis gelten. Der oberste Höhenbereich bzw. Heizkreis kann etwas höher sein, beispielsweise maximal 20% höher sein.

Das oberste Heizelement des obersten Heizkreises kann einen größeren Abstand in der Höhe zu dem benachbarten darunterliegenden Heizelement aufweisen, als dieses wiederum zu den benachbarten darunterliegenden Heizelementen. Dieser größere Abstand kann zwischen 20% und 90% einer Breite des Heizelements liegen. Ansonsten können die Heizelemente allgemein einen sehr geringen Abstand zueinander aufweisen, beispielsweise 3% bis 10% ihrer Breite.

In vorteilhafter Ausgestaltung der Erfindung verlaufen die Bahnen auf gleicher Höhe rechtwinklig zur Längsachse des Wasserbehälters. Auf einer Höhe verläuft besonders vorteilhaft jeweils nur eine einzige Bahn bzw. ein einziges Heizelement.

In weiterer Ausgestaltung der Erfindung können bei einem Heizkreis Heizelemente in mindestens zwei unterschiedlichen Ausgestaltungen vorgesehen sein, wobei sich diese Heizelemente bzgl. elektrischer Leistung, Länge, Breite und/oder Dicke unterscheiden. Vorteilhaft unterscheiden sie sich nur bzgl. eines dieser vorgenannten Kriterien und nicht bzgl. der anderen vorgenannten Kriterien, besonders vorteilhaft unterscheiden sie sich bzgl. ihrer Breite und somit ihres elektrischen Widerstands.

Die Heizelemente sind bevorzugt als Heizleiter in Bahnform ausgebildet und verlaufen parallel zueinander. Mehrere Heizleiter eines Heizelements oder eines Heizkreises sind dabei vorteilhaft separat voneinander ansteuerbar und können parallel zueinander geschaltet sein bzw. schaltbar sein. So ergibt sich eine einfache Ansteuerung.

Es ist alternativ möglich, dass die Heizelemente als Heizleiter zwar auch in Bahnform ausgebildet sind und sämtlich parallel zueinander verlaufen, aber mehrere Heizelemente bzw. Heizleiter als Bahnen elektrisch seriell zusammen geschaltet sind, also in Reihe, und insbesondere mäanderförmig verlaufen. Vorteilhaft weisen dabei mindestens zwei Heizelemente eines gemeinsamen Heizkreises mehrere mäanderförmig ineinander verlaufende Heizleiter in Bahnform auf.

Beim Betrieb einer solchen Verdampfeinrichtung, insbesondere in einem entsprechenden Gargerät, können neben den Betriebsparametern der Heizkreise bzw. Heizelemente selbst die vorgenannten Temperatursensoren der ersten Art und der zweiten Art ausgewertet werden. Damit können beispielsweise die im Folgenden beschriebenen Ereignisse festgestellt werden.

Es kann eine zunehmende Verkalkung an einer Innenseite der Außenwandung festgestellt werden. Diese ist problematisch dahingehend, da dann die Wärmeübertragung von den Heizelementen an der Außenseite des Wasserbehälters auf das darin befindliche Wasser schlechter wird. Somit sinkt nicht nur der Wirkungsgrad der Verdampfereinrichtung bzgl. Energieeffizienz, sondern es können unter Umständen die geforderten Dampf- und Temperaturwerte nicht mehr erreicht werden. Darüber hinaus besteht eine Gefahr einer Überhitzung, insbesondere an der Außenseite der Außenwandung bzw. an den Heizelementen, was bis zu einer Beschädigung führen kann. Dies soll verhindert werden, deswegen darf keine allzu starke großflächige Verkalkung entstehen. Des Weiteren kann eine lokal begrenzte Überhitzung an der Innenseite der Außenwandung erfasst werden. Diese kann beispielsweise durch eine vorbeschriebene zunehmende lokale Verkalkung auftreten, wobei sie eben ein zusätzliches und in aller Regel gravierenderes weil kritischeres Problem darstellt. Insbesondere kann hier auch die Verdampfereinrichtung beschädigt oder sogar zerstört werden.

Des Weiteren kann das Absinken einer Füllstandshöhe von Wasser in dem Wasserbehälter unter einen der Heizkreise erfasst werden. Fällt die Füllstandshöhe an einem oder sogar unter einen obersten Heizkreis ab, so muss dieser unter Umständen insgesamt abgeschaltet werden und gleichzeitig Wasser nachgefüllt werden, da ansonsten ein Betrieb dieses obersten Heizkreises nicht mehr möglich ist. Des Weiteren kann das Absinken der Füllstandshöhe unter ein oberstes Heizelement des obersten Heizkreises erfasst werden, wenn auf dessen Höhe ein Temperatursensor der zweiten Art angeordnet ist. Dann kann für dieses oberste Heizelement des obersten Heizkreises vorgesehen sein, dass es, wie zuvor beschrieben worden ist, einen etwas größeren Abstand zum nächstgelegenen Heizelement aufweist. Die Flächenlast bzw. Flächenleistung kann für dieses oberste Heizelement geringer sein als für die anderen, beispielsweise 3% bis 20% oder sogar bis 35%. Es kann so ausgelegt sein, dass auf seiner Höhe kein Wasser mehr im Inneren des Wasserbehälters sein muss und dennoch keine kritische hohe Temperatur in seinem Bereich auftritt, die zu einer Beschädigung führen könnte. Deswegen ist dieses oberste Heizelement eben etwas höher angeordnet. Es kann auch bei derselben Länge wie die anderen Heizelemente etwas breiter sein, beispielsweise 3% bis 20% oder sogar 35%, wodurch sich bei gleichem Stromdurchfluss wie durch die anderen Heizelemente die geringere Leistung ergibt. Bei größerer beheizter Fläche kann auch aufgrund des größeren Abstands zum nächsten Heizelement die Flächenleistung etwas geringer sein, wenn die Flächenleistung auf die Fläche der Außenwandung mit Heizelementfläche plus Abstandsfläche bezogen gesehen wird.

In Ausgestaltung der Erfindung kann ein elektrischer Widerstand der Heizkreise bzw. von deren Heizelementen im zeitlichen Verlauf überwacht und ausgewertet werden. So kann eine großflächige Verkalkung an der Innenseite der beheizten Außenwandung erkannt werden, wenn nämlich der zeitliche Verlauf dieses elektrischen Widerstands verglichen wird mit einer Auswertung bzw. einem zeitlichen Verlauf der Temperatursensoren der ersten Art, die die flächige Temperaturüberwachung darstellen. Eine solche großflächige Verkalkung baut sich nämlich langsam auf über eine längere Betriebsdauer hinweg, beispielsweise erst ab einigen Stunden Betriebsdauer.

Anhand des zeitlichen Verlaufs der Verkalkung über den Betrieb bzw. eine Betriebsdauer kann über eine mathematische Funktion der verbleibende Zeitraum bis zu einer kritischen Temperatur bzw. Verkalkung hinsichtlich Dicke der Kalkschicht bestimmt werden. Dann kann sozusagen eine Art Vorwarnung als Signal an einen Benutzer ausgegeben werden, damit dieser weiß, wann bzw. wie bald eine Entkalkung stattfinden muss.

Im Falle eines Ausfalls eines obersten Heizkreises der Verdampfereinrichtung, oder wenn dort ein unzulässiger Zustand festgestellt worden wäre und anschließend der oberste Heizkreis abgeschaltet wird, kann die Verdampfereinrichtung mit einem oder mehreren Heizkreisen darunter noch weiter betrieben werden. Der oberste Heizkreis ist zwar nicht immer derjenige mit der größten Verkalkung an der Innenseite der Außenwandung, aber definitiv derjenige, der am ehesten teilweise oder ganz leergekocht ist, also kein Wasser mehr auf seiner Höhe ist. Dann kann dieser Heizkreis abgeschaltet werden. Da die darunterliegenden Heizkreise aber ggf. noch ausreichend Wasser haben auf ihrer Höhe, kann deren Betrieb weitergehen. Dabei wird ebenfalls eine entsprechende Information über diesen Zustand an einen Benutzer ausgegeben, so dass dieser ggf. eingreifen kann, beispielsweise eine Entkalkung oder eine Reparatur veranlassen kann.

Des Weiteren kann für den Fall, dass ein Temperatursensor der zweiten Art an dem obersten Heizkreis, der auch noch relativ weit oben an diesem Heizkreis angeordnet ist, eine hohe Temperatur feststellt, vorgesehen sein, dass dies als Signal für das Nachfüllen von Flüssigkeit in den Wasserbehälter angesehen wird. Dieses kann dann automatisch erfolgen über ein Ventil odgl. am Wasserzulauf in den Wasserbehälter. Die zugeführte Menge kann aus den geometrischen Verhältnissen am Bereich des obersten Heizkreises bestimmt werden.

In einer Ausbildung der Erfindung ist es möglich, dass der mindestens eine Durchlasskanal an der Innentrennwand direkt bzw. durch die Innentrennwand vorgesehen ist als eine Art einfache Durchlassöffnung für das Wasser. Dies kann unten noch direkt in der Trennwand selbst oder an einem unteren Bereich der Innentrennwand sein, also evtl. in einem Boden des Wasserbehälters, an den die Innentrennwand heranreicht bzw. auf dem die Innentrennwand stehen kann. Der Durchlasskanal muss also nicht zwingend in der Innentrennwand selbst vorgesehen sein. Vorteilhaft sind der Durchlasskanal bzw. eine entsprechende Durchlassöffnung an einem untersten Punkt der Innentrennwand vorgesehen oder in einem untersten Bereich der Innentrennwand. Dadurch ist es möglich, dass das Wasser möglichst weit unterhalb der Oberfläche des siedenden Wassers im Außenbereich nachfließt, um eine besser steuerbare Dampfentwicklung zu ermöglichen. Vorteilhaft können mehrere Durchlasskanäle oder Durchlassöffnungen vorgesehen sein, besonders vorteilhaft zwei bis sechs Durchlasskanäle.

In einer vorteilhaften Ausgestaltung der Erfindung kann die Innentrennwand in vertikaler Richtung weitgehend gerade verlaufen, sich also von unten nach oben gerade erstrecken. Dabei ist sie umlaufend bzw. ringartig geschlossen ausgebildet, vorzugsweise als eine Art Rohr bzw. Rohrabschnitt, insbesondere zylindrisch. Vorteilhaft kann die Innentrennwand auf einem Boden des Wasserbehälters aufstehen bzw. mit diesem verbunden sein. So kann die Innentrennwand gut im Wasserbehälter befestigt werden und eine Befestigung an der Außentrennwand, welche thermisch nachteilig wäre sowie das Erhitzen des Wassers behindern würde, ist nicht notwendig. Besonders vorteilhaft ist die Innentrennwand bis auf den Durchlasskanal zwischen Innenbereich und Außenbereich geschlossen und umlaufend ausgebildet. So kann sie beispielsweise ein genannter Rohrabschnitt sein, der an seiner Unterkante Ausnehmungen für die Durchlasskanäle oder den Durchlasskanal aufweist, die dann beim Aufstellen auf einen Boden des Wasserbehälters eben den untersten Bereich der Innentrennwand definieren. Alternativ zu solchen Durchlasskanälen direkt in der Innentrennwand könnten in dem Boden des Wasserbehälters rinnenartige Vertiefungen vorgesehen sein, die zwischen 2 mm und 5 mm bis 10 mm unterhalb der sonstigen Bodenfläche reichen. Steht die Innentrennwand mit einer geraden bzw. in einer Ebene verlaufenden Unterkante auf dem vorteilhaft ansonsten ebenen Boden auf, so werden zwischen dieser Unterkante und den Vertiefungen die Durchlasskanäle gebildet. In diesem Fall sind die Durchlasskanäle dann eigentlich eher am bzw. im Boden des Wasserbehälters gebildet als direkt an der Innentrennwand selbst.

Wie zuvor angedeutet sollte allgemein die Innentrennwand bzw. der von ihr gebildete Innenbereich in vertikaler Richtung nach oben offen sein oder Öffnungen aufweisen. Bei einer Verdampfereinrichtung in einer Ausgestaltung der Erfindung ist vorteilhaft vorgesehen, dass die Innentrennwand den Innenbereich nicht überdeckt oder abschließt. Besonders vorteilhaft ist hier die Innentrennwand ausschließlich vertikal ausgebildet. Dies hat den Zweck, dass während des Dampfaustritts von dem Dampf mitgerissene Wassertropfen oder kondensiertes Wasser direkt nach unten in den Innenbereich tropfen können und somit erneut direkt in den Wasserkreislauf in den Außenbereich hinein zur Dampferzeugung einfließen. Hierzu wird nachfolgend noch mehr ausgeführt im Zusammenhang mit einer Dampfführung entsprechend einer vorteilhaften Ausbildung der Erfindung.

Vorteilhaft kann ganz allgemein bei der Erfindung vorgesehen sein, dass auch der Innenbereich zumindest teilweise, insbesondere weitgehend, mit Wasser gefüllt ist. Durch die wasserführende Verbindung über den Durchlasskanal mit dem Außenbereich ist die Höhe des Wasserstandes im Innenbereich dieselbe wie die im Außenbereich.

Bevorzugt sind die Außenwandung und die Innentrennwand umlaufend und/oder rund ausgebildet. Besonders bevorzugt können sie einen gleichartigen Querschnitt aufweisen, so dass es beispielsweise möglich ist, sie jeweils kreisrund auszugestalten.

Die Außenwandung und die Innentrennwand können vorteilhaft jeweils Längsmittelachsen aufweisen, die parallel zueinander sind. Vorteilhaft fallen die Längsmittelachsen zusammen. Dann weisen Außenwandung und Innentrennwand stets gleichen Abstand zueinander auf bzw. das Wasservolumen pro Fläche der außen angeordneten Heizeinrichtung bzw. Heizkreise ist weitgehend überall gleich. Dadurch ist eine gleichmäßige Einbringung von Heizleistung und somit eine gleichmäßige Erhitzung des Wassers im Außenbereich möglich.

In Ausgestaltung der Erfindung ist es möglich, dass eine Heizeinrichtung an der Außenseite eine in der Richtung nach oben variierende Verteilung der Heizleistung aufweist. So kann die Heizleistung pro Flächeneinheit und somit die Flächenleistungsdichte nach oben zunehmen, insbesondere bis ganz nach oben. Dies ist zuvor ja auch erläutert worden.

Ein Vorteil einer rohrartigen Ausgestaltung zumindest der Außenwandung liegt auch noch darin, dass dann eine Aufbringung von Dickschichtheizleitern besonders gut möglich ist. Dies kann vorteilhaft durch Bedrucken erfolgen.

Bei einer vorteilhaften Ausbildung der Erfindung ist eine Dampfführung hin zum Dampfaustritt vorgesehen, die den Innenbereich zumindest teilweise überdeckt bzw. über diesem verläuft. Es ist zwar möglich, den Wasserbehälter nach oben zu einfach zu schließen mit einer Art Deckel odgl., in dem dann eine Öffnung als Dampfaustritt mit daran anschließendem Rohr oder Schlauch zur Weiterleitung des Dampfes in den Dampfgarer vorgesehen ist. Vorteilhaft bewirkt die Dampfführung aber auch eine Art Trennung von einerseits Dampf und andererseits mitgerissenen Wasserpartikeln bzw. Wassertröpfchen oder Wassertropfen, die nicht in das Innere des Gargeräts gelangen sollen. Dazu kann die Dampfführung Führungsflächen aufweisen, die einen schrägen Verlauf haben, wobei die Schräge nach unten in den Innenbereich weisen kann. Dadurch kann an diesen schrägen Führungsflächen ein Niederschlagen der genannten Wasserpartikel oder Wassertröpfchen stattfinden, die dann selbsttätig in den Innenbereich hineintropfen und so, wie zuvor erläutert, wieder in den Wasserkreislauf gelangen. Dabei können diese Führungsflächen umlaufend bzw. rotationssymmetrisch ausgebildet sein und beispielsweise als eine Art Konus oder konischer Ring ausgebildet sein.

Vorteilhaft liegt ein Dampfaustritt über dem Innenbereich, besonders vorteilhaft in vertikaler Richtung genau über dem Innenbereich. Dann kann Dampf ohne große Umwege, die mit Nachteilen wie Abkühlung und Verzögerung einer Dampferzeugung im Dampfgarer, verbunden sind, vermieden werden. Des Weiteren kann dann ein vorgenanntes Abtropfen oder Herausfallen von Wasserpartikeln oder Wassertröpfchen auch noch direkt am Dampfaustritt in den Innenbereich hinein erfolgen.

Wie zuvor angedeutet, ist der Wasserbehälter vorteilhaft nach oben zu geschlossen. Dazu kann ein Deckel vorgesehen sein, an dessen höchstem Punkt der vorgenannte Dampfaustritt vorgesehen sein kann. Vorzugsweise ist nur der Dampfaustritt daran vorgesehen als einzige Öffnung des Wasserbehälters nach außen bzw. nach oben.

In weiterer Ausgestaltung der Erfindung kann der Wasserbehälter zusätzlich zu Wasserzulauf und Dampfaustritt maximal eine weitere Schnittstelle als Zulauf oder Ablauf aufweisen. Diese kann genutzt werden zum Entkalken, Entleeren odgl., so dass sich kein stehendes Wasser ansammeln kann, was bei längeren Betriebspausen schädlich wäre. Vorzugsweise ist der Wasserbehälter bis auf Wasserzulauf und Dampfaustritt geschlossen. Die weitere Schnittstelle ist bevorzugt verschließbar, beispielsweise manuell oder mit einem gesteuerten Ventil.

In vorteilhafter Ausbildung der Erfindung ist eine Heizeinrichtung nur an der Außenseite der Außenwandung vorgesehen. Dadurch ist es möglich, sie an einem trockenen Bereich anzuordnen. Es könnte zwar auch am Boden des Wasserbehälters, insbesondere unterhalb des Außenbereichs, eine Heizeinrichtung zusätzlich angeordnet sein, die diesen zusätzlich beheizt. Hier ist jedoch die zur Verfügung stehende Fläche und somit die dadurch erreichbare Heizleistung gering. Besonders vorteilhaft wird eine Dickschichtheizeinrichtung mit Dickschichtheizleitern verwendet, die vor allem gut ist für eine flächige Beheizung.

In vorteilhafter Ausbildung der Erfindung führt ein Wassereintritt direkt in den Innenbereich, insbesondere ausschließlich in den Innenbereich und nicht direkt in den Außenbereich. Dadurch kann eben nachströmendes Wasser, das insbesondere üblicherweise kühl ist und das evtl. eine zusätzliche Wasserbewegung erzeugt, nur in den Innenbereich geführt werden. Durch den mindestens einen Durchlasskanal kann es dann selbststätig und voraussichtlich mit geringer Dynamik in den Außenbereich nachfließen.

In vorteilhafter Ausbildung der Erfindung ist die Innentrennwand niedriger als die Außenwandung des Wasserbehälters. Gleichzeitig ist vorteilhaft die Innentrennwand höher als eine an der Außenwandung angeordnete Heizeinrichtung, so dass ein Wasserspiegel von Wasser in dem Wasserbehälter unterhalb der Innentrennwand liegt. Gleichzeitig sollte der Wasserspiegel aber in etwa die Höhe der Heizeinrichtung haben, so dass kein zu großer Anteil der Heizeinrichtung über dem Wasserspiegel liegt und somit der Gefahr einer zu starken Überhitzung ausgesetzt ist. In Zahlen ausgedrückt kann die Höhe der Innentrennwand zwischen 80% und 99%, vorteilhaft zwischen 85% und 95%, der Höhe der Außenwandung betragen. Bei einer etwas anderen Ausgestaltung der Erfindung sollten dies zwischen 70% und 90% sein, also etwas weniger.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine seitliche Schnittdarstellung durch eine erste erfindungsgemäße Verdampfereinrichtung und
- Fig. 2: eine zweite erfindungsgemäße Verdampfereinrichtung.

### DETAILLIERTE BESCHREIBUNG DER AUSFÜHRUNGSBEISPIELE

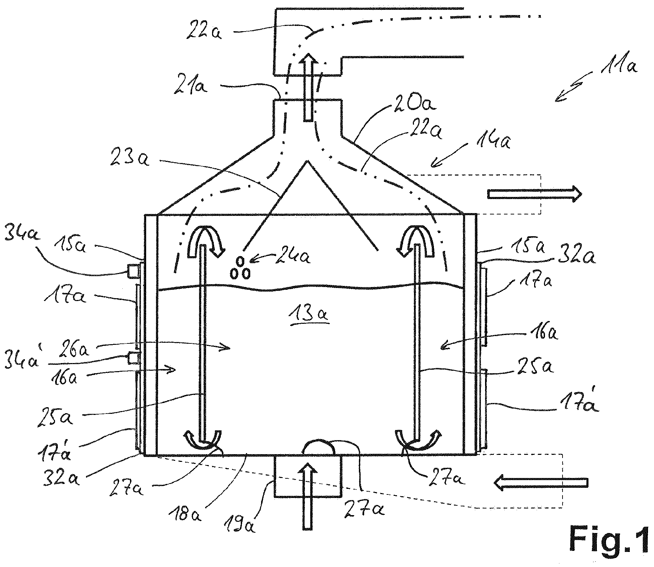

In der Fig. 1 ist schematisch eine erfindungsgemäße Verdampfereinrichtung gemäß der Erfindung dargestellt. Sie ist vorteilhaft in einen nicht dargestellten Dampfgarer als Gargerät eingebaut, der auch einen größeren Wassertank aufweist. Die Verdampfereinrichtung 11a enthält Wasser 13a zum Verdampfen in einem sogenannten Wasserbehälter 14a. Der Wasserbehälter 14a ist im Wesentlichen ein rundes bzw. kreisrundes und weitgehend rotationssymmetrisches Rohr mit einer Außenwandung 15a, an der außen zwei flächige Heizeinrichtungen 17a oben und 17a' unten vorgesehen sind. Die Heizeinrichtungen 17a oben und 17a' sind vorteilhaft Dickschicht-Heizelemente bzw. weisen Dickschicht-Heizleiter auf, die auf gleicher Höhe verlaufen und beispielsweise mäanderförmig verlaufen. Dies ist aus dem Stand der Technik bekannt, wozu beispielsweise auf die DE 102007029244 A1 oder die EP 16162649.4 mit Anmeldetag vom 29. März 2016 derselben Anmelderin verwiesen wird, deren Inhalt hiermit diesbezüglich durch ausdrückliche Bezugnahme zum Inhalt der vorliegenden Anmeldung gemacht wird. Deswegen sind die flächigen Heizeinrichtungen 17a oben und 17a' unten hier nur eher schematisch dargestellt.

Der Wasserbehälter 14a weist einen Boden 18a mit einem zentralen Wasserzulauf 19a auf. Der Wasserzulauf 19a ist nicht weiter beschrieben oder dargestellt, da dieser für den Fachmann leicht realisierbar und bekannt ist. So kann der Wasserzulauf 19a beispielsweise an einen höher gelegenen Tank mit einem Ventil daran angeschlossen sein, so dass Wasser durch die Schwerkraft von alleine sozusagen direkt bei Öffnen des Ventils eintreten kann. Nach oben zu ist der Wasserbehälter 14a durch einen Deckel 20a verschlossen, der konusartig nach oben zuläuft und in einen zentralen Dampfaustritt 21a übergeht, der an der höchsten Stelle des Deckels 20a bzw. des gesamten Wasserbehälters 14a vorgesehen ist. Von dort aus geht strichpunktiert dargestellter Dampf 22a in ein Rohr hinein und wird in einen Garraum des Dampfgarers, in den die Verdampfereinrichtung 11a eingebaut ist, geführt.

In dem Wasserbehälter 14a ist eine Innentrennwand 25a angeordnet, die im Prinzip auch als eine Art kurzes Rohr ausgebildet ist und konzentrisch zur Außenwandung 15a verläuft. Während der Wasserbehälter 14a vorteilhaft weitgehend aus Metall gefertigt ist, insbesondere aus Edelstahl, kann die Innentrennwand 25a auch aus Kunststoff oder Keramik ausgebildet sein. Dies ist dann von Vorteil, wenn sie thermisch dämmend wirken soll. Soll sie im Gegensatz dazu thermisch gut leitend ausgebildet sein, so kann sie aus Metall ausgebildet sein, und zwar entweder aus thermisch besonders gut leitendem Metall wie Kupfer, alternativ aus demselben Material wie der Wasserbehälter 14a.

Im unteren Bereich bzw. an einer Unterkante der Innentrennwand 25a sind mehrere Durchlasskanäle 27a vorgesehen. Sie können abgerundete bzw. halbrunde Form aufweisen und nur im unteren Bereich bzw. an der Unterkante der Innentrennwand 25a vorgesehen sein. Alternativ oder zusätzlich können noch an dieser Stelle Vertiefungen im Boden 18a des Wasserbehälters 14a vorgesehen sein, so dass unter Umständen die Innentrennwand 25a sogar als gerade abgeschnittenes Rohr ausgebildet sein kann. Ein Wasserfluss zwischen einem Innenbereich 26a und einem Außenbereich 16a kann so nur durch die im Boden 18a gebildeten Durchlasskanäle 27a stattfinden. Diese Variation ist für den Fachmann aber leicht vorstellbar und kann unter anderem von Fertigungsbedingungen abhängen. Üblicherweise wird es aber als einfacher angesehen, die Durchlasskanäle 27a als Ausnehmungen am unteren Rand der Innentrennwand 25a vorzusehen, die ein eigenständiges Bauteil ist, welches im Wasserbehälter 14a bzw. auf dem Boden 18a befestigt ist. Dann kann auch der Boden 18a als einfaches flaches Bauteil ausgebildet sein, an den mittig der Wasserzulauf 19a befestigt wird und außen die Außenwandung 15a. Auf alle Fälle ist es vorteilhaft, wenn die Durchlasskanäle 27a unten bzw. möglichst weit unten im Wasserbehälter 14a angeordnet sind, so dass möglichst viel Wasser vom Innenbereich 26a in den beheizten Außenbereich 16a fließen kann. Des Weiteren fließt das Wasser möglichst weit weg von der Oberseite des Wassers 13a bzw. vom Wasserspiegel in den Außenbereich 16a und stört somit die Erhitzung bzw. Verdampfung möglichst wenig.

Eine Dampfführung wird zum einen durch den konisch gewölbten und nach innen gezogenen Deckel 20a gebildet, was an dem Verlauf des Dampfes 22a erkannt werden kann. Mittig über dem Innenbereich 26a, insbesondere zentral und rotationssymmetrisch, sind Führungsflächen 23a vorgesehen. Diese können mittels nicht dargestellter Haltestege an der Innentrennwand 25a befestigt sein und somit zusammen mit dieser im Wasserbehälter 14a befestigt sein. Alternativ kann die Führungsfläche 23a innen am Deckel 20a befestigt sein. In beiden Fällen kann dies mittels nicht dargestellter Haltestege erfolgen. Sinn und Zweck der Führungsfläche 23a ist es, dass beim Entlangströmen des Dampfes 22a am Deckel 20a gebildetes kondensiertes Wasser sowie mitgerissene Wassertröpfchen 24a nach unten in den Innenbereich 26a hinein fallen. Zusätzlich verhindert die Führungsfläche 23a, dass erzeugter Dampf unterhalb des Dampfaustritts 21a zu weit nach unten absinkt in Richtung des Wasserspiegels im Innenbereich 26a und dadurch zu stark abkühlen könnte. Somit wird zwischen Deckel 20a und Führungsfläche 23a eine Art Dampfkanal gebildet.

Beim Sieden des Wassers 13a im Außenbereich 16a entstehende Spritzer von Wassertropfen odgl. können, wie die Pfeile über die obere Kante der Innentrennwand 25a andeuten, direkt nach innen in den Innenbereich 26a umgelenkt werden.

Gestrichelt dargestellt ist in der Fig. 1 ein alternativer Wasserzulauf unten an den Boden 18a, der in tangentialer Art herangeführt ist. Ebenso kann, wie gestrichelt dargestellt ist, ein alternativer Dampfaustritt am Deckel 20a vorgesehen sein.

Die flächige Heizeinrichtung 17a ist nicht direkt auf die Außenseite der Außenwandung 15 a aufgebracht sondern es ist eine vorbeschriebene dielektrische Isolationsschicht 32a darauf aufgebracht, beispielsweise direkt auf die metallische Außenseite. Sie kann die einzige Isolation sein oder es sind mehrere Isolationsschichten vorgesehen. Die dielektrische Isolationsschicht 32a bildet einen wesentlichen Teil der Temperatursensoren der ersten Art, wie sie eingangs beschrieben worden sind. Die Isolationsschicht 32a weist einen gewissen Abstand zur Unterkante und zur Oberkante des Wasserbehälters 13a auf, beispielsweise zwischen 5% und 25% seiner Länge bzw. Höhe. So verläuft die Isolationsschicht 32a im Wesentlichen unterhalb der Heizeinrichtungen 17a und 17a'. Auf die Isolationsschicht 32a sind dann zusätzlich zu den Heizeinrichtungen 17a und 17a' auch noch Temperatursensoren 34a oben und 34a' unten aufgebracht. Dies sind diskrete Temperatursensoren der eingangs genannten zweiten Art, beispielsweise PT1000-Sensoren, vorteilhaft in SMD-Bauweise und direkt auf Kontaktfelder aufgebracht. So ist die elektrische Kontaktierung leichter.

Wie eingangs erläutert worden ist, ist es entweder möglich, die gesamte dielektrische Isolationsschicht 32a homogen bzw. aus demselben Material oder Glas herzustellen. Alternativ können aber auch zwei unterschiedlich leitfähige Materialien bzw. Gläser verwendet werden. Diese können sogar übereinander und/oder aufeinander aufgebracht werden, wobei sie jeweils einzeln kontaktiert werden müssen.

Die dielektrische Isolationsschicht 32a kann noch einen hier nicht dargestellten elektrischen Anschluss aufweisen, vorteilhaft über ein entsprechendes Kontaktfeld. Ein elektrischer Außenseitenkontakt an den Wasserbehälter 14a bzw. direkt an dessen metallische Außenwandung 15a ist hier ebenfalls nicht dargestellt, kann aber leicht erfolgen. Beispielsweise oberhalb der dielektrischen Isolationsschicht 32a ist hierfür ausreichend Platz vorhanden. Da die dielektrische Isolationsschicht 32a auf diese metallische Außenwandung 15a aufgebracht ist, und auf sie wiederum die Heizelemente 17a und 17a' aufgebracht sind, kann gemäß obenstehender Funktionsbeschreibung sowie der Funktionen gemäß der vorgenannten DE 102013200277 A1 der Aufbau der Temperatursensoren der ersten Art erläutert werden. Die Isolationsschicht 32a bildet sozusagen einen flächigen, temperaturabhängigen elektrischen Widerstand, der bei Temperaturen bis etwa 80 °C einen sehr hohen elektrischen Widerstand aufweist und somit kein Strom über die Isolationsschicht fließt, wobei diese Temperatur einstellbar ist. Ein solcher Strom kann einerseits an dem Außenseitenkontakt erfasst werden und andererseits, um quasi verschiedene Bereiche zu unterscheiden, mittels Zusatzkontakten im obersten Bereich der Heizeinrichtung 17a. Deren einzelne Heizelemente können hier dann als Elektrode dienen. Steigt die Temperatur auch nur in einem kleinen Bereich weiter an und erreicht sie beispielsweise 100 °C, so nimmt der elektrische Widerstand ab. Bei Temperaturen von beispielsweise 150 °C kann der Widerstand in diesem kleinen Bereich so weit abgenommen haben, dass zwar noch die elektrischen Isolationseigenschaften ausreichend gegeben sind, um die Heizeinrichtungen 17a und 17a' problemlos auf dem metallischen Wasserbehälter 14a zu betreiben. Es kann aber schon ein fließender Strom bzw. Leckstrom sicher erfasst werden, der in diesem Temperaturbereich fließen kann. Eine genaue Bestimmung eines solchen lokal überhitzten kleinen Bereichs ist nicht punktgenau möglich, aber immerhin in dem Bereich, in dem die von einem Zusatzkontakt kontaktierten Heizeinrichtungen 17a und 17a' bzw. deren einzelne Heizleiter verlaufen.

Zu derart hohen und deutlich über 100 °C liegenden Temperaturen kann es beim Betrieb der Verdampfereinrichtung 11a bzw. eines damit versehenen Verdampfers und beim Verdampfen von Wasser eigentlich nur dann kommen, wenn einerseits kein Wasser mehr vorhanden ist oder andererseits durch starke Verkalkung an einer Stelle die Wärmeabnahme nicht mehr groß genug ist, so dass es zu der Überhitzung kommt. In dem ersten Fall, dass sich in einem solchen Bereich allgemein kein Wasser mehr befindet, kann eine Gegenkontrolle vorgenommen werden mit dem Zustand des jeweiligen zweiten Temperatursensors 34a oder 34a', vor allem des obersten Temperatursensors 34a. Stellt dieser auch eine Temperatur von über 100 °C fest, so ist offensichtlich der Füllstand des Wassers abgesunken. Stellt aber gerade der oberste Temperatursensor 34a noch eine Temperatur von maximal 100 °C fest, so liegt eine deutlich höhere, von einem Temperatursensor der ersten Art zusammen mit der Isolationsschicht 32a und den Zusatzkontakten festgestellte höhere Temperatur an einer zu starken Verkalkung an der Innenseite des Wasserbehälters 14a vor. Je nach Umfang des flächigen Bereichs und nach Höhe der Übertemperatur kann die entsprechende Heizeinrichtung 17a oder 17a' weiterbetrieben werden oder aber abgeschaltet werden. In jedem Fall kann eine eingangs beschriebene Signalisierung an eine Bedienperson erfolgen, um darauf aufmerksam zu machen, dass die Verdampfereinrichtung 11a bzw. der Verdampfer entkalkt werden muss.

Eine Aussage zur Verkalkung der Heizeinrichtungen 17a oder 17a' bzw. Heizkreise ist mit der Auswertung der beiden Arten von Temperatursensoren möglich. Somit kann festgestellt werden ob eine einheitliche bzw. gleichmäßige Verkalkung der Heizeinrichtungen vorliegt, also eine geometrisch in etwa gleich verteilte Verkalkung. Wenn keine gleichmäßige Verkalkung der Heizeinrichtungen vorliegt kann durch unterschiedliches Schalten der Heizeinrichtungen im Betrieb eine einheitliche Verkalkung herbeigeführt werden, also dort stärker, wo sie bislang noch nicht so stark war. Beim Betrieb des Gerätes kann die verbleibende Zeit bis zur nächsten notwendigen Entkalkung durch den Benutzer oder einen Servicetechniker angezeigt werden.

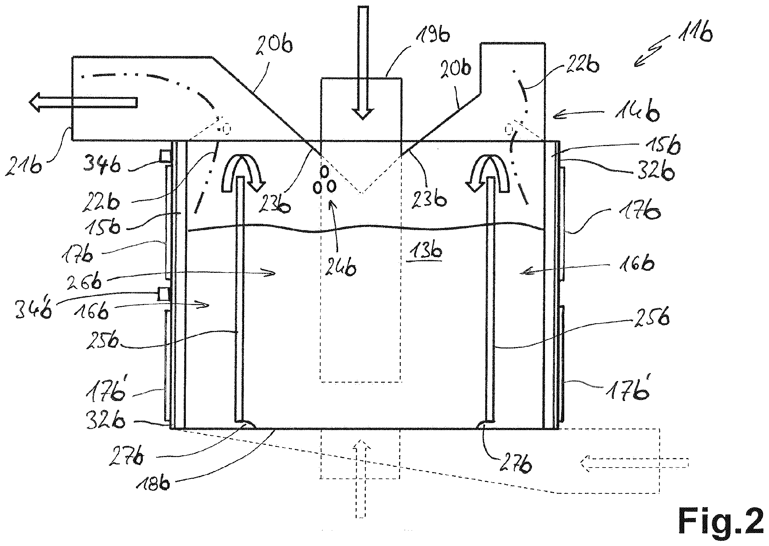

In der zweiten Möglichkeit einer Verdampfereinrichtung 11b entsprechend Fig. 2 weist ein Wasserbehälter 14b eine rohrartig umlaufende Außenwandung 15b auf. An dieser sind außen zwei Heizeinrichtungen 17b und 17b' vorgesehen wie auch zuvor beschrieben, also eine oben und eine unten. Sie reichen allerdings weiter nach oben an der Außenwandung 15b als in der Fig. 1.

Der Wasserbehälter 14b weist einen Boden 18b und einen Deckel 20b. Der Boden ist hier einfach und eben ohne Unterbrechung oder Durchbrechung ausgebildet, weil ein Wasserzulauf 19b von oben zentral durch den Deckel 20b hindurch geht, und zwar auch wieder, wie gestrichelt dargestellt ist, in einen Innenbereich 26b innerhalb einer Innentrennwand 25b, beispielsweise bis kurz vor den Boden 18b. Die Innentrennwand 25b ist hier mit zwei Durchlasskanälen 27b ausgebildet. Sie bildet mit der Außenwandung einen Außenbereich 16c.

Am Deckel 20b ist um den zentralen Wasserzulauf 19b herum eine konusartige Führungsfläche 23b vorgesehen. An deren Unterkante können aus dem austretenden Dampf 22b herausfallende Wassertropfen 24b wiederum direkt in den Innenbereich 26b und nicht in den Außenbereich 16b gelangen.

Im Außenabschnitt weist der Deckel 20b einen umlaufenden, ringartigen Kanal auf, der nach links zu dem Dampfauslass 21b führt. Bei dieser Ausbildung der Erfindung kann also bei einer grundsätzlichen vertikalen Gestaltung sowohl der Innentrennwand 25b als auch der Außenwandung 15b das Sammeln von Dampf 22b nicht zentral über dem Innenbereich 26b erfolgen, sondern über dem Außenbereich 16b. Durch die schrägen Führungsflächen 23b, die ebenfalls nach innen in den Innenbereich bzw. in einen Mittelbereich des Innenbereichs 26b gerichtet sind, können am Deckel 20b gesammeltes Kondenswasser oder Wassertröpfchen 24b nach unten in den Innenbereich 26b zurückfließen.

Gestrichelt dargestellt ist in der Fig. 2 ein alternativer Wasserzulauf unten an den Boden 18b, der ähnlich wie in Fig. 1 ausgebildet ist. Ebenso kann, wie gestrichelt dargestellt ist, ein alternativer Wasserzulauf tangential am Boden 18b vorgesehen sein.

Auch in der Verdampfereinrichtung 11b entsprechend Fig. 2 ist eine dielektrische Isolationsschicht 32b mit nicht dargestellten Anschlüssen vorgesehen, die hier aber im Wesentlichen die gesamte Außenwandung 15b des Wasserbehälters 14b bedeckt. Sie bildet auf vorbeschriebene Art und Weise den Temperatursensor der ersten Art. Ebenso sind diskrete Temperatursensoren 34b und 34b' der zweiten Art vorgesehen. Auch zu deren Ausgestaltung und Funktion wird auf die vorherige Beschreibung zur Fig. 1 verwiesen.

## Patentansprüche

1. Verdampfereinrichtung (11) für Wasser (13), insbesondere für einen Dampfgarer als Gargerät, wobei
- die Verdampfereinrichtung (11) einen Wasserbehälter (14) mit einer Außenwandung (15) aufweist,
- an der Außenwandung (15) eine Heizeinrichtung (17) mit mindestens einem Heizkreis vorgesehen ist,
- der mindestens eine Heizkreis mindestens ein Heizelement aufweist,
- in dem Wasserbehälter (14) eine Innentrennwand (25) vorgesehen ist, die mit Abstand zu der Außenwandung verläuft und die einen Innenbereich (26) in dem Wasserbehälter (14) definiert,
- zwischen Innentrennwand (25) und Außenwandung (15) ein Außenbereich (16) ist,
- der Wasserbehälter (14) einen Wasserzulauf (19) und einen Dampfaustritt (21) aufweist,
- mindestens ein Temperatursensor (32) einer ersten Art an einer Außenseite der Außenwandung (15) vorgesehen ist,
- der Temperatursensor (32) der ersten Art als flächige Beschichtung an der Außenseite der Außenwandung (15) aufgebracht ist,
**dadurch gekennzeichnet, dass**
- für den Temperatursensor der ersten Art auf der Außenseite der Außenwandung (15) eine dielektrische Isolationsschicht (32) aufgebracht ist,
- über der dielektrischen Isolationsschicht (32) die Heizelemente eines Heizkreises aufgebracht sind,
- über den Heizelementen eine Abdeckschicht vorgesehen ist,
- eine Messelektrode vorgesehen ist auf der Abdeckschicht,
- eine Messeinrichtung sowohl mit der Messelektrode als auch mit den Heizelementen verbunden ist und ausgebildet ist zur Erfassung eines Stromflusses zwischen den Heizelementen und der Messelektrode zur Auswertung als Maß für eine Temperaturänderung an dem Heizkreis bzw. an dem Wasserbehälter (14) im Bereich nahe dem Heizkreis,
- die Isolationsschicht (32) direkt auf die Außenseite der Außenwandung (15) aufgebracht ist und einen Großteil von deren gesamter Oberfläche bedeckt.

2. Verdampfereinrichtung nach Anspruch 1, **dadurch gekennzeichnet, dass** der Wasserbehälter (14) mindestens einen Durchlasskanal (27) aufweist für einen Wasserfluss zwischen dem Innenbereich (26) und dem Außenbereich (16), wobei vorzugsweise der Durchlasskanal (27) an der Innentrennwand (25) bzw. durch die Innentrennwand vorgesehen ist als mindestens eine Durchlassöffnung für das Wasser (13) unten an der Innentrennwand (25) oder in einem unteren Bereich der Innentrennwand, vorzugsweise an einem untersten Punkt oder in einem untersten Bereich der Innentrennwand.

3. Verdampfereinrichtung nach Anspruch 1 oder 2, **dadurch gekennzeichnet, dass** die Innentrennwand (25) in vertikaler Richtung weitgehend gerade verläuft, wobei sie umlaufend bzw. ringartig geschlossen ausgebildet ist, wobei vorzugsweise die Innentrennwand auf einem Boden des Wasserbehälters (14) aufsteht bzw. mit diesem verbunden ist und insbesondere bis auf einen Durchlasskanal (27) geschlossen umlaufend ausgebildet ist.

4. Verdampfereinrichtung nach einem der vorhergehenden Ansprüche, **dadurch gekennzeichnet, dass** eine einzige durchgehende Isolationsschicht (32) unter allen Heizelementen vorgesehen ist.

5. Verdampfereinrichtung nach einem der vorhergehenden Ansprüche, **dadurch gekennzeichnet, dass** auf der Isolationsschicht (32) eine weitere Zusatz-Isolationsschicht aufgebracht ist, insbesondere als Zwischen-Glasschicht, wobei vorzugsweise die Heizelemente auf die Zusatz-Isolationsschicht aufgebracht sind.

6. Verdampfereinrichtung nach einem der vorhergehenden Ansprüche, **dadurch gekennzeichnet, dass** die Messelektrode und die Heizelemente in unterschiedlichen Schichten verlaufen, vorzugsweise mit der Isolationsschicht (32) und/oder einer Abdeckschicht dazwischen, wobei insbesondere die Messelektrode flächig ausgebildet ist und im Wesentlichen die Heizelemente überdeckt.

7. Verdampfereinrichtung nach einem der vorhergehenden Ansprüche, **dadurch gekennzeichnet, dass** pro Heizkreis mindestens ein Temperatursensor (32) der ersten Art vorgesehen ist, vorzugsweise genau ein Temperatursensor der ersten Art, wobei der Temperatursensor der ersten Art mindestens 50% der Fläche der Heizelemente des zugehörigen Heizkreises bedeckt, insbesondere 90% bis 100%.

8. Verdampfereinrichtung nach einem der vorhergehenden Ansprüche, **dadurch gekennzeichnet, dass** bei einem unteren Heizkreis ein Temperatursensor einer zweiten Art in deren unterem Bereich angeordnet ist, insbesondere in den untersten maximal 10% des Höhenbereichs, wobei der Temperatursensor der zweiten Art des oberen Heizkreises in dem oberen Höhenbereich dieses Heizkreises angeordnet ist, vorzugsweise in den obersten maximal 15%.

9. Verdampfereinrichtung nach einem der vorhergehenden Ansprüche, **dadurch gekennzeichnet, dass** die Innentrennwand (25) in vertikaler Richtung nach oben offen ist, wobei vorzugsweise die Innentrennwand den Innenbereich (26) nicht überdeckt oder abschließt.

10. Verdampfereinrichtung nach einem der vorhergehenden Ansprüche, **dadurch gekennzeichnet, dass** die Außenwandung (15) und die Innentrennwand (25) umlaufend und/oder rund ausgebildet sind, insbesondere mit gleichartigem Querschnitt ausgebildet sind, vorzugsweise kreisrund.

11. Verdampfereinrichtung nach einem der vorhergehenden Ansprüche, **dadurch gekennzeichnet, dass** ein Wassereintritt in den Innenbereich (26) führt, insbesondere ausschließlich bzw. zuerst in den Innenbereich, vorzugsweise in einem unteren Bereich.

12. Verdampfereinrichtung nach einem der vorhergehenden Ansprüche, **dadurch gekennzeichnet, dass** die Innentrennwand (25) niedriger ist als die Außenwandung (15) des Wasserbehälters (14) bzw. höher ist als die an der Außenwandung angeordnete Heizeinrichtung (32), wobei vorzugsweise die Innentrennwand (25) über den vorgesehenen bzw. definierten Wasserspiegel von Wasser (13) in dem Wasserbehälter ragt.

13. Gargerät mit einer Verdampfereinrichtung (11) nach einem der vorhergehenden Ansprüche, wobei insbesondere das Gargerät ein Dampfgarer ist.

## Claims

1. Evaporator device (11) for water (13), in particular for a steam cooker as a cooking device, wherein
- the evaporator device (11) includes a water tank (14) having an exterior wall (15),
- a heating device (17) having at least one heater circuit is provided on the exterior wall (15),
- the at least one heater circuit includes at least one heating element,
- within the water tank (14) is provided an interior partition wall (25) extending spaced to the exterior wall and defining an interior area (26) within the water tank (14),
- between interior partition wall (25) and exterior wall (15) is an exterior area (16),
- the water tank (14) has a water inlet (19) and a steam outlet (21),
- at least one temperature sensor (32) of a first type is provided on an exterior side of the exterior wall (15),
- the temperature sensor (32) of the first type is applied as a laminar coating on the exterior side of the exterior wall (15),
**characterized in that**
- a dielectric insulation layer (32) is applied on the exterior side of the exterior wall (15) for the temperature sensor of the first type,
- the heating elements of a heater circuit are applied above the dielectric insulation layer (32),
- a cover layer is provided above the heating elements,
- a measurement electrode is provided on the cover layer,
- a measurement device is connected to both the measurement electrode and to the heating elements and configured for detecting a current flow between the heating elements and the measurement electrode for evaluation as a measure for a temperature variation on the heater circuit and the water tank (14), respectively, in the region close to the heater circuit,
- the insulation layer (32) is applied directly on the exterior side of the exterior wall (15) and covers a major part of the total surface area thereof.

2. Evaporator device according to claim 1, **characterized in that** the water tank (14) includes at least one passage channel (27) for a water flow between the interior area (26) and the exterior area (16), wherein preferably the passage channel (27) is provided on the interior partition wall (25) or through the interior partition wall as at least one passage opening for the water (13) at the bottom of the interior partition wall (25) or in a lower region of the interior partition wall, preferably on a lowest point or in a lowest region of the interior partition wall.

3. Evaporator device according to claim 1 or 2, **characterized in that** the interior partition wall (25) extends largely straight in the vertical direction, wherein said wall has a circumferential or ring-type closed design, wherein preferably the interior partition wall stands on a base of the water tank (14) or is connected thereto and in particular is circumferentially closed with the exception of a passage channel (27).

4. Evaporator device according to any of the preceding claims, **characterized in that** a single continuous insulation layer (32) is provided below all heating elements.

5. Evaporator device according to any of the preceding claims, **characterized in that** on the insulation layer (32) is applied a further additional insulation layer, in particular as an intermediate glass layer, wherein preferably the heating elements are applied on the additional insulation layer.

6. Evaporator device according to any of the preceding claims, **characterized in that** the measurement electrode and the heating elements extend in different layers, preferably with the insulation layer (32) and/or a cover layer interposed, wherein in particular the measurement electrode is of planar design and essentially covers the heating elements.

7. Evaporator device according to any of the preceding claims, **characterized in that** per heater circuit at least one temperature sensor (32) of the first type is provided, preferably exactly one temperature sensor of the first type, wherein the temperature sensor of the first type covers at least 50 % of the surface area of the heating elements of the related heater circuit, in particular 90 % to 100 %.

8. Evaporator device according to any of the preceding claims, **characterized in that** with a lower heater circuit a temperature sensor of a second type is arranged in a lower region thereof, in particular in the lowermost at maximum 10 % of the height range, wherein the temperature sensor of the second type of the upper heater circuit is arranged in the upper height range of said heater circuit, preferably in the uppermost at maximum 15 %.

9. Evaporator device according to any of the preceding claims, **characterized in that** the interior partition wall (25) is open to the top in the vertical direction, wherein preferably the interior partition wall does not cover or close the interior area (26).

10. Evaporator device according to any of the preceding claims, **characterized in that** the exterior wall (15) and the interior partition wall (25) are circumferential and/or rounded in design, in particular are designed with similar cross section, preferably circular.

11. Evaporator device according to any of the preceding claims, **characterized in that** a water inlet leads into the interior area (26), in particular exclusively or first into the interior area, preferably in a lower region.

12. Evaporator device according to any of the preceding claims, **characterized in that** the interior partition wall (25) is shorter than the exterior wall (15) of the water tank (14) or is higher than the heating device (32) arranged on the exterior wall, wherein preferably the interior partition wall (25) projects beyond the provided or defined water level of water (13) within the water tank.

13. Cooking device having an evaporator device (11) according to any of the preceding claims, wherein in particular the cooking device is a steam cooker.

## Revendications

1. Évaporateur (11) pour de l'eau (13), en particulier pour un cuiseur vapeur en tant que appareil de cuisson, dans lequel
- l'évaporateur (11) présente un réservoir d'eau (14) avec une paroi extérieure (15),
- sur la paroi extérieure (15) est fourni un dispositif de chauffage (17) avec au moins un circuit de chauffe,
- l'au moins un circuit de chauffe présente au moins un élément de chauffage,
- dans le réservoir d'eau (14) est fournie une paroi de cloison intérieure (25), s'étendant à distance de la paroi extérieure et définissant une zone intérieure (26) dans le réservoir d'eau (14),
- entre la paroi de cloison intérieure (25) et la paroi extérieure (15) est une zone extérieure (16),
- le réservoir d'eau (14) présente une entrée d'eau (19) et une sortie de vapeur (21),
- au moins un capteur de température (32) d'un premier type est fourni sur un côté extérieur de la paroi extérieure (15),
- le capteur de température (32) du premier type est appliqué sous forme de couche laminaire sur le côté extérieur de la paroi extérieure (15),
**caractérisé en ce que**
- une couche d'isolation diélectrique (32) est appliquée sur le côté extérieur de la paroi extérieure (15) pour le capteur de température du premier type,
- les éléments de chauffage d'un circuit de chauffe sont appliqués au-dessus de la couche d'isolation diélectrique (32),
- une couche de couverture est fournie au-dessus des éléments de chauffage,
- une électrode de mesure est fournie sur la couche de couverture,
- le dispositif de mesure est raccordé aussi bien à l'électrode de mesure et aux éléments de chauffage et configuré pour détecter un passage de courant entre les éléments de chauffage et l'électrode de mesure pour l'évaluation en tant que indicateur d'une variation de température sur le circuit de chauffe ou bien sur le réservoir d'eau (14) dans la zone près du circuit de chauffe,
- la couche d'isolation (32) est appliquée directement sur le côté extérieur de la paroi extérieure (15) et recouvre une grande partie de sa surface totale.

2. Évaporateur selon la revendication 1, **caractérisé en ce que** le réservoir d'eau (14) présente au moins un canal de passage (27) pour un débit d'eau entre la zone intérieure (26) et la zone extérieure (16), dans lequel de préférence le canal de passage (27) est fourni sur la paroi de cloison intérieure (25) ou à travers la paroi de cloison intérieure en tant que au moins une orifice de passage pour l'eau (13) au fond de la paroi de cloison intérieure (25) ou dans une zone inférieure de la paroi de cloison intérieure, de préférence sur un point plus inférieure ou dans une zone plus inférieure de la paroi de cloison intérieure.

3. Évaporateur selon la revendication 1 ou 2, **caractérisé en ce que** la paroi de cloison intérieure (25) s'étend largement droit dans la direction verticale, dans lequel la paroi est de construction fermée circonférentielle ou bien de type annulaire, dans lequel de préférence la paroi de cloison intérieure se dresse sur un sol du réservoir d'eau (14) ou bien est connectée au sol et en particulier est de construction fermée circonférentielle à l'exception d'un canal de passage (27).

4. Évaporateur selon l'une quelconque des revendications précédentes, **caractérisé en ce qu'**une seule couche d'isolation (32) en continu est fournie en-dessous de tous les éléments de chauffage.

5. Évaporateur selon l'une quelconque des revendications précédentes, **caractérisé en ce que** sur la couche d'isolation (32) une autre couche d'isolation additionnelle est appliquée, en particulier sous forme de couche intermédiaire de verre, dans lequel de préférence les éléments de chauffage sont appliqués sur la couche d'isolation additionnelle.

6. Évaporateur selon l'une quelconque des revendications précédentes, **caractérisé en ce que** l'électrode de mesure et les éléments de chauffage s'étendent dans des couches différentes, de préférence avec la couche d'isolation (32) et/ou une couche de couverture interposée(s), dans lequel en particulier l'électrode de mesure se présente sous forme planaire et pour l'essentiel recouvre les éléments de chauffage.

7. Évaporateur selon l'une quelconque des revendications précédentes, **caractérisé en ce que**, par circuit de chauffe, au moins un capteur de température (32) du premier type est fourni, de préférence exactement un capteur de température du premier type, dans lequel le capteur de température du premier type recouvre au moins 50 % de la superficie des éléments de chauffage du circuit de chauffe correspondant, en particulier 90 % à 100 %.

8. Évaporateur selon l'une quelconque des revendications précédentes, **caractérisé en ce que** sur un circuit de chauffe inférieur un capteur de température d'un deuxième type est arrangé dans une zone inférieure, en particulier dans les au maximum 10 % plus inférieures de la zone de hauteur, dans lequel le capteur de température du deuxième type du circuit de chauffe supérieur est arrangé dans la zone de hauteur supérieur dudit circuit de chauffe, de préférence dans les plus supérieurs au maximum 15 %.

9. Évaporateur selon l'une quelconque des revendications précédentes, **caractérisé en ce que** la paroi de cloison intérieure (25) est ouverte vers le haut dans la direction verticale, dans lequel de préférence la paroi de cloison intérieure ne recouvre pas ou ne ferme pas la zone intérieure (26).

10. Évaporateur selon l'une quelconque des revendications précédentes, **caractérisé en ce que** la paroi extérieure (15) et la paroi de cloison intérieure (25) se présentent sous forme circonférentielle et/ou ronde, en particulier présentant une section transversale similaire, de préférence circulaire.

11. Évaporateur selon l'une quelconque des revendications précédentes, **caractérisé en ce qu'**une entrée d'eau débouche dans la zone intérieure (26), en particulier exclusivement ou bien initialement dans la zone intérieure, de préférence dans une zone inférieure.

12. Évaporateur selon l'une quelconque des revendications précédentes, **caractérisé en ce que** la paroi de cloison intérieure (25) est plus courte que la paroi extérieure (15) du réservoir d'eau (14) ou bien plus haut que le dispositif de chauffage (32) arrangé sur la paroi extérieure, dans lequel de préférence la paroi de cloison intérieure (25) dépasse par le niveau d'eau prévu ou bien défini de l'eau (13) dans le réservoir d'eau.

13. Appareil de cuisson comportant un évaporateur (11) selon l'une quelconque des revendications précédentes, dans lequel en particulier l'appareil de cuisson est un cuiseur vapeur.
